# EUROPEAN PATENT APPLICATION

(11) **EP 4 484 723 A1**
(43) Date of publication of application: **01.01.2025**
(21) Application number: 24184994.2
(22) Date of filing: 27.06.2024
(51) Int. Cl.: F02C 3/05, F02C 3/10, F02C 3/14, F02C 7/10, F02K 3/105, F02K 3/115

(54) **SUPERCHARGED TURBOFAN WITH RECUPERATIVE CYCLE**

(30) Priority: 30.06.2023 IT 202300013617
(71) Applicant: Mariotti, Gabriele, 44121 Ferrara (IT)
(72) Inventor: Mariotti, Gabriele, 44121 Ferrara (IT)
(74) Representative: Bruni, Giovanni

(57) **Abstract**

The present invention relates to aviation propulsion systems and more specifically to turbofan engines with high by-pass ratio.

A propulsive system based on high by-pass ratio turbofan engine has lower specific consumption than turbojet engines in subsonic aerial vehicles for general aviation and unmanned drones.

## Description

### Background of the disclosed embodiments

The turbofan is a propulsion system based on a turbomachine, or simply engine, where a gas turbine, often referred as ''gas generator "', drives a ducted fan which accelerates a stream of air which provides the propulsive action together with the action of combustion gases.

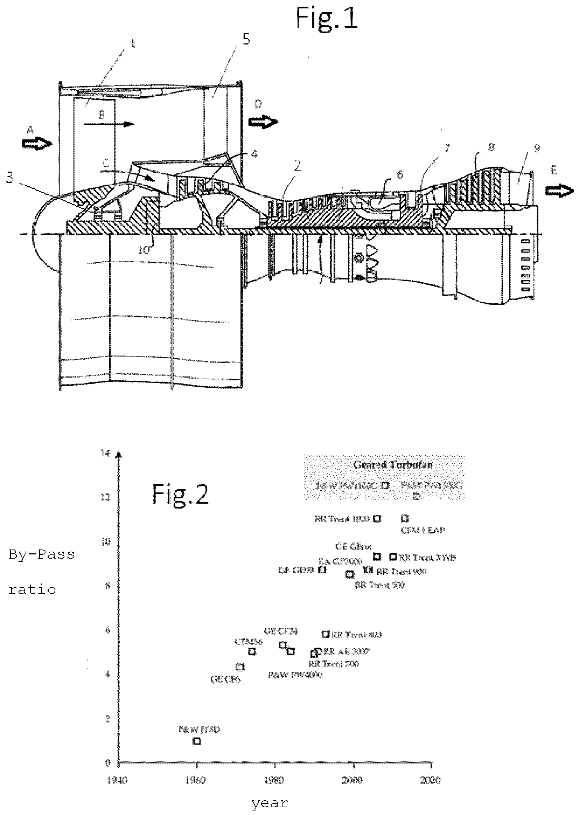

A turbofan typically includes a fan section, consisting of one or more impellers with associated deswirl vanes and a gas generator which includes a compressor section, a combustor section and a turbine section. Figure 1 shows a typical cross-section of an high-bypass ratio turbofan for aeronautical propulsion.

With reference to figure 1, the air entering the turbofan in section A is divided into two flow streams, B and C. The stream B, also called cold flow, is compressed by an axial impeller 1 and subsequently expanded in an array of deswirl vanes 5, sometimes called with term ''outlet guide vanes (OGV)'' and in a nozzle increasing the air velocity in section D. The flow C, also called hot flow, undergoes a first compression by the impeller 1 feeding a low pressure compressor 4, followed by a high pressure compressor 2, and a combustion section 6 where the air is mixed with the fuel and ignited to generate high-energy exhaust gases. The exhaust gases expands through the high-pressure axial turbine section 7 driving the compressor and a low-pressure axial turbine section 8 that drives the impeller fan 1. The flow downstream of the low-pressure turbine expands in a nozzle 9 with exhaust temperatures in the order of 500 - 600°C.

Turbofan engines are generally characterized by the parameter "by-pass ratio" which is the ratio between the cold flow and the flow elaborated by the "gas generator". In modern turbofans there is a tendency to adopt high by-pass ratio, for instance greater than 6, to obtain low specific consumption. Fig. 2 shows the trend over time of the by-pass ratio for several aeronautical turbofan. It is known that an increase in the by-pass ratio allows to obtain a propulsion system which improves performance in the range of speed of commercial aircraft, for example less than 800 miles per hour (mph). The improvement is mainly due to the reduction in relative velocity between the cold flow and the environment, therefore with reduced energy losses associated with turbulence and diffusion of the flow streams.

As shown in Fig.1, a turbofan with a high by-pass ratio is characterized by a fan 1 of much larger dimensions than the compressor 4 of the gas generator, being the volumetric flow rate of a turbomachine proportional to the square of the diameter of the impellers. This also requires a different rotational speed between the fan and the gas generator since the rotation speed of a turbomachine is generally inversely proportional to its diameter.

The turbofan configuration shown in Fig.1, called "twin spool'', allows the fan to operate at a lower speed than the compressor with the two axial turbine sections arranged on separate shafts.

For a large fan that operates at 4000 rotations per minute (indicated by the acronym ''RPM") driven by the low pressure turbine, the corresponding gas generator operates at a rotation speed greater than 12000 RPM, with a ratio approximately equal to 4. With this configuration the size of the low pressure turbine is much larger than the size of the high pressure turbine despite both are processing the same flow rate of exhaust gas. While RPM varies with engine size, the ratio of fan RPM to gas generator RPM is relatively invariant to the size and power of the turbofan.

When the difference in speed and diameter between the low pressure turbine and the high pressure turbine becomes too large, it is not possible to optimize the design with negative impact on the efficiency of the propulsion system. In particular, with the axial configuration of the turbofan components, as indicated in General Electric Co patent US4916894A, it is necessary, on high by-pass ratio turbofans, to have the average blades diameter of the low pressure turbine much larger than the diameter of the high pressure turbine with negative impact on weight, on frontal section of the engine and with a reduction in the fluid-dynamic efficiency of the turbines.

This feature limits, in the current technology of twin spool turbofan engines, the by-pass ratio to values lower than 10. In Rolls-Royce patents EP 3 730 768 A1 and US20210017911A1 is shown a method to overcome the above limitations by reducing the rotation speed of the fan respect to the low pressure axial turbine by interposing a gear box between them. In the section of the turbofan shown in Fig.1, the gear box 10 allows the fan to operate at a lower rotation speed than the turbine which can thus be optimized with obvious advantages on overall efficiency.

A second method to increase the efficiency of the turbofan is to recover part of the heat from the exhaust gases of the gas generator, for example as described in patent US8387357B2 by Pratt and Whitney, where an heat-exchanger, also called recuperator, downstream of the low pressure turbine, heat up the air flow from the compressor before entering the combustion chamber using the residual heat of the exhaust gases. This method allows to heat up the gases in the combustor using a smaller quantity of fuel. It is known that in gas turbine engines the maximum cycle temperature, directly linked to the turbine inlet temperature, is limited by technological factors to a maximum value between 1200°C and 1700°C depending on the specific design.

A further method for recovering the energy present at the exhaust of the gas generator, sometimes associated with the one described previously, is that used in "associated flow"turbofan engines, for example the GE Honda HF 120 turbofan. In these engines the cold flow downstream of the fan de-swirl vanes is heated directly by the exhaust of the gas generator which mixes with the cold flow before the final nozzle that accelerates the entire flow to generate thrust. The disadvantage of this configuration is that the gas generator turbine does not expand up to the ambient pressure but to an higher pressure level, corresponding to the value upstream of the final nozzle 9 in Fig.1, thus reducing the work generated and consequently the overall efficiency of the system. Moreover, the effectiveness of mixing is poor due to the large difference in speed between the two flows.

In general, the improvement in the performance of a turbofan engine can be linked to the increase of the by-pass ratio, which increases its propulsive efficiency, i.e. its specific consumption expressed in terms of fuel consumption per unit of thrust and time, or to the recovery of the energy of the exhaust gases of the gas generator.

The use of very high by-pass ratio, for example greater than 10, is very effective for reducing specific consumption but requires the introduction of a gear box with obvious disadvantages in terms of weight, cost and reliability. This solution limits its use to medium-large engines for commercial aircraft.

The recovery of heat from high temperature exhaust gases, 500-600°C, to improve the specific consumption of engines has not found effective solutions in current technology. Flow-associated type turbofans are mainly used to reduce the noise produced by the gas generator exhaust gases rather than to exploit their energy content. The use of turbofans with recovery cycles with an exchanger on the gas generator has not found commercial solutions in the aeronautical sector due to the increase in weight and pressure drop that the exchanger introduces as it is an additional component downstream of the turbine.

With reference to the aforementioned limitations, there is a need for systems and methods to develop high by-pass ratio turbofans with simple architecture which recover the energy at the exhaust of the gas generator in a simple and effective way. It is known that a simple mechanical architecture, i.e. with a minimum number of components, can lead to greater reliability with savings in weight and cost.

### Brief summary of the disclosed embodiments

The subject of the present invention is a turbofan with a recuperative cycle, i.e. with partial recovery of the heat at the exhaust of the gas generator, and with an architecture that allows to efficiently achieve an high by-pass ratio, for example greater than 10, without the use of a gear box between the turbine and the fan, therefore solving the aforementioned limitations of the prior art. The heat recovery from the exhaust gases of the gas generator is realized by heating the cold flow of the fan without mixing the air stream with the stream of exhaust gases, using the fan deswirl vanes as heating surface with the hot exhaust gases of the gas generator that are circulating inside them.

Heating the "cold" flow of the fan inside the flow path delimited by the deswirl vanes, the increase in efficiency is achieved thanks to an increase of the energy content of the flow with consequent greater thrust without affecting the back pressure of the gas generator turbine gas as it would be imposed by the fan nozzle.

Advantageously, inside the deswirl vanes of the fan there is also a recuperator where the hot exhaust gases from the turbine heat up the flow of compressed air coming from the high pressure compressor before entering the combustion chamber, therefore reducing the fuel consumption necessary to raise the temperature before expanding in the turbine.

The recuperator is made up of several heat exchangers, positioned inside the de-swirl vanes of the fan, allowing the heat to be transferred from the combustion gases at 500-600°C to the compressed air coming from the compressor, raising its temperature, for example by approximately 150-300°C, with fuel savings proportional to the air flow rate and its specific heat.

It is known that a gas turbine with a recuperative cycle has greater efficiency the greater the heat exchanged between the hot exhaust gases and the air flow that feeds the combustion chamber. In preferred embodiments of this invention, assuming a maximum pressure of the high pressure compressor at sea level of 6.0 Bar and 265°C temperature, the recuperative cycle allows a reduction in specific consumption of the turbofan of approximately 15-30%.

To maximize the radiating surface, the array of deswirl vanes, that form the turbofan nozze, extend from the trailing edge of the impeller fan to the end of the machine. By increasing this length it is maximized the chord of the profile and therefore the radiating surface. The increase in length of the cord allows the use of a reduced number of vanes with a profile thickness greater than an application according to the prior art. The larger thickness allows for sufficient space inside the vanes to circulate the exhaust gases of the turbine and promoting heat to be exchanged between the air flow from the fan and the air flow from the compressor.

Preferably, the vanes that form the fan nozzle also have a structural function to support the stator parts of the gas generator, the parts of the annular compressed air fan flow channel up to the exhaust and the anchoring points of the engine to the aircraft.

Preferably, the gas generator has a ''reverse flow"' type configuration, i.e. with the direction of air inlet to the compressor opposite to the direction of thrust of the turbofan. The air that feeds the compressor is taken from openings in the channel downstream of the fan impeller and is distributed to the compressor via appropriately insulated channels that pass through the deswirl vanes until reaching an annular area fluidly connected to the compressor's inlet. This configuration allows the turbine exhaust to be adjacent to the fan wheel and therefore convey the hot gases to the deswirl vanes with a minimum length of the ducts.

Preferably, the exhaust from the high pressure turbine is directed perpendicular to the rotation axis and it is fluidly connected to a multi-stage radial outflow turbine that directly drives the fan. The use of the radial outflow turbine, instead of the axial type commonly used in the prior art, overcome the problem of the sudden increase in the height of the gas channel which is present when there are two arrays of turbine axial blades elaborating the same flow at very different rotational speed. From simple geometric considerations it can be demonstrated that with the same average peripheral speed of the blading, the radial turbine has a smaller height of the gas channel, i.e. the channel that delimits the flow entering and exiting the blading, compared to the channel associated with an axial turbine of equal volumetric flow. The use of the radial outflow turbine makes possible an efficient fluid matching of a "fast" gas generator, for example with a speed of 100,000 rotations per minute, with a "slow"' fan, for example 20,000 rotations per minute, i.e. with a ratio of approximately 5 without interposing a complex speed reduction gear system.

In some embodiments the de-swirl vanes are made with additive manufacturing in light aeronautical alloys, for example titanium or with brazed aluminum plates.

Advantageously, thanks to the present invention, a turbofan can have a 15-40% improvement in specific consumption with limited or no weight increase compared to a solution according to the prior art.

Preferably the present invention applies to small turbofans with thrust less than 1000 lbf where it is more important to have simple solutions with a minimum number of components.

The invention has application both in the propulsion of general and commercial aviation as well as in the propulsion of remotely assisted aircraft for military applications. Advantageously, the present invention reduces the maximum temperature of the exhaust gases with obvious advantages in the ability of the aircraft to be identified with infrared detectors.

Advantageously, the invention allows a reduction in the noise generated as the noise from exhaust gases is shielded and attenuated inside the exchangers that are realized inside the vanes of the fan nozzle.

Characteristics and embodiments are described hereafter and are further defined in the attached claims which form an integral part of the present description. The above brief description identifies characteristics of the various embodiments of the present invention so that the following detailed description can be better understood. The various embodiments of the invention are not limited in their application to the construction details and component arrangements described in the following description or illustrated in the drawings. The invention may be implemented in other embodiments and implemented and practiced in various ways.

### Brief description of the Figures

Further characteristics and advantages of the invention will be more evident in light of the detailed description of preferred, but not limited, embodiments of an improved recuperative cycle turbofan illustrated by way of example, and not by way of limitation, with the aid of the attached drawing tables in which:
Fig. 1 illustrates a sectional view of a high by-pass ratio turbofan according to the prior art
Fig. 2 shows the evolution over time of the by-pass ratio of aeronautical turbofans for commercial aviation
Fig. 3 illustrates a section of an improved turbofan with recuperative cycle according to an embodiment of the present disclosure;
Fig. 4 provides a qualitative three-dimensional representation of the annular duct with de-swirl vanes downstream of the fan according to the design defined in the claims of the present invention
Fig. 5 illustrates a section of the transition piece between the outlet section of the radial turbine and the channels/vanes downstream of the impeller fan according to the claims of the present invention;
Fig. 6 illustrates the flow configuration typical of the recuperator according to the design defined in the claims of the present invention.
Fig. 7 illustrates the configuration of a typical radial turbine rotor stage

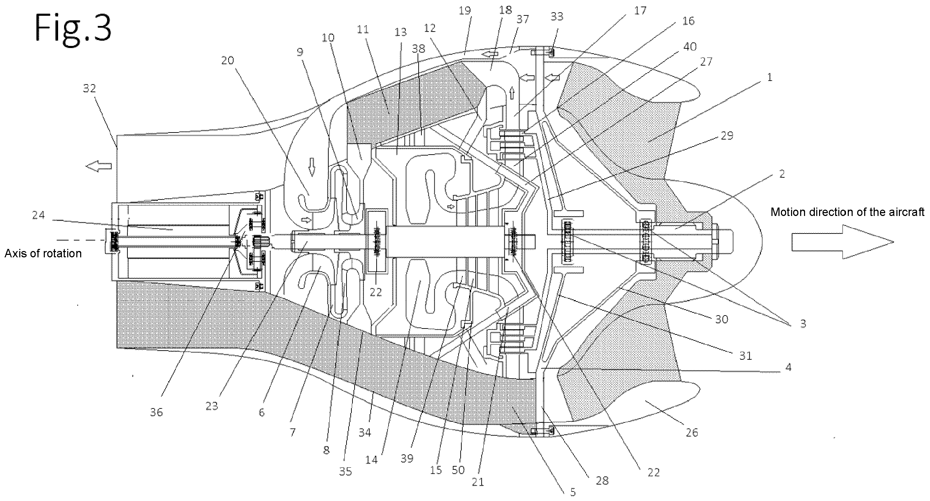

Except for the references to Fig. 1 and Fig. 2, the same reference numbers and letters in Fig. 3, Fig. 4, Fig. 5 and Fig. 6 identify the same elements or components.

### Detailed description of a preferred embodiment of the invention

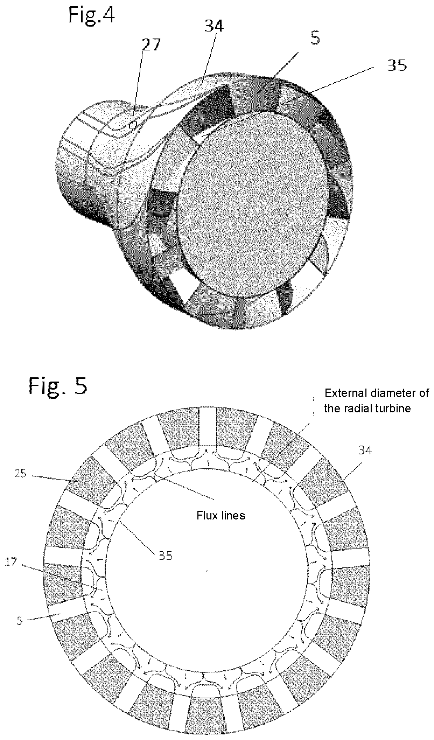

The Figure 3 shows a configuration corresponding to the essential components of an improved turbofan with recuperative cycle according to the present invention. The figure shows several sections of the machine on the same meridional plane to highlight components that can be cyclically repeated on the machine around the rotation axis which also forms an axis of symmetry for these components. A typical example of these components are the deswirl vanes 5. Fig. 4 and Fig. 5 schematically show some details inside the machine.

A mixed flow centrifugal impeller 1 including three-dimensional blades is present. The impeller is made of aluminum alloy or composite material with carbon fibers and titanium alloy. The impeller elaborate the incoming air imparting a radial and tangential acceleration, therefore increasing its kinetic and potential energy. A shroud 26, shaped according to the profile of the blades, is positioned with minimum radial clearance, 0.05 - 0.3 mm, to avoid circulation of compressed air at the tip of the blades. The impeller is mounted onto the shaft 2 with a central hole having a feature for torque transmission, such as a polygonal coupling or a splined profile, and a centering diameter to avoid excessive unbalancing during rotation.

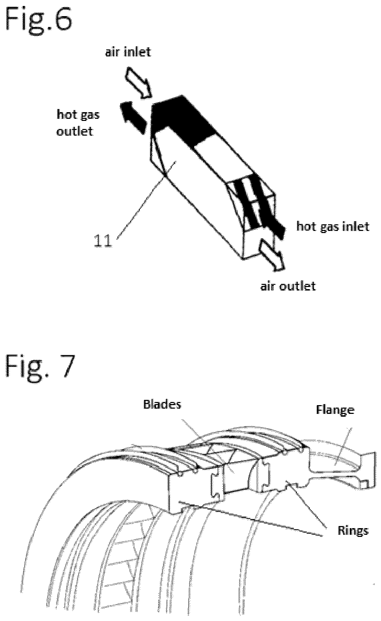

The shaft 2 is supported by two rolling bearings 3, respectively a ball bearing on the front, i.e. the one closest to the impeller, and cylindrical roller on the rear side. The shaft is mechanically connected to the turbine 3, which is shown with three stages in cascade, in particular to the rings that support the array of blades, via the turbine disk 29. Figure 7 shows a typical configuration of the blades of a radial outflow turbine with support rings connected to the turbine disk 29 via a flange. The bearings 3 of the shaft 2 are isolated from the external environment with a chamber, not shown in the figure, buffered with air taken downstream the impeller 1 according to a known technique. The bearings 3 and the shaft 2 are supported by a frame formed by an external ring 28 where openings are present, not shown in the figure, fluidly connected to the profile formed by the des-wirl vanes 5 and the conical struts 30 and 31, the latter including a thermal insulation, not shown in the figure, to shield the heat radiated from the turbine disk 29. The external ring 28 also incorporates the attachment points, not shown, of the engine to the aircraft structure according to a known technique. The flow of compressed air from the impeller 1, for example with a total pressure of 1.2 Bar, after passing through openings on the flange 28 enters an annular section with channels, delimited by the vanes 5 and the walls 34 and 35, where the air is heated and accelerated up to the exit of the channels corresponding to the trailing edge of the vanes 32.

The vanes 5 are profiled to receive the compressed air from the impeller 1 with a tangential component of the velocity, i.e. perpendicular to the meridian plane of Fig 3, which is progressively decreased up to the trailing edge of the vanes, 32, to increase the thrust. The surface of the vanes 5 has a three-dimensional shape as shown in figure 4. The assembly formed by the vanes 5, the surface wall 34 - 35 and everything connected to them is mechanically and fluidly connected to the flange 28 with a set of screws 33. Downstream of the flange 28, a portion of the air elaborated by the impeller 1 is bleeded, for example 6.5% by mass at 1.2 Bar, and distributed through appropriate openings 37 to several channels 19, fluidly separated by the wall 34, to the plenum 20 which distributes the air to the gas generator. The air partially compressed at 1.2 Bar is compressed by a first stage of centrifugal compressor comprising an impeller 6, a diffuser 7 and a vaned return channel 8 which feeds a second stage of centrifugal compressor comprising an impeller 9 and a diffuser 10. The two Impellers 6 and 9 are overhang mounted onto a shaft 23, rotary supported by two rolling bearings 22, and where the stages of the high pressure turbine are also mounted according to a known technique. The impellers are mechanically connected to the shaft by means of polygonal or splined features for torque transmission and centered radially on the shaft. The bearings 22 of the shaft 23 are mounted inside sumps which are in communication, via the channels 21 and 27, with the components of the engine external to the surface wall 34, where auxiliary piping systems, not shown in figure 3, for lubrication and compressed air to buffer the engine cavities are present. The channels 21 and 27, for drain and vent respectively, pass through appropriate cavities inside the vanes 5 in order not to obstruct the fan flow.

The diffuser 16 is mechanically and fluidly connected via the transition piece 10 to the recuperator 11 formed by a plurality of exchangers positioned inside the vanes 5. The transition piece 10 distributes the flow of compressed air from an annular surface to the openings positioned in correspondence with the deswirl vanes 5. The compressed air from the recuperator 11 feeds the combustion chamber 14 passing through the supply channels 12 which are fluidly connected to the recuperator 11. The combustion chamber 14 is of the radial type with a distributor of fuel, for example kerosene or hydrogen, made with a rotating ring connected onto the shaft according to a known technique not shown in the figure. The fuel-air mixture is ignited at start-up by means of an ignition device positioned in the channel 38 which penetrate through the blades 5, without interfering with the air flow of the fan, until it reaches the area outside the wall 34 where the turbofan accessories, not shown in Fig. 3, are mounted. The combustion chamber 14, according to a known technique, has holes and openings which allow the air to be appropriately distributed for the combustion process.

The combustion gases from the combustion chamber 14 are expanded in the high pressure turbine 15, firstly in a nozzle 34 and subsequently in the rotating blades 15 of a first axial turbine stage followed by a second axial turbine stage. The two axial turbine stages having their respective discs mechanically connected to the shaft 23 so as to drive the compressor which operates at the same rotational speed of the turbine, for example 100,000 rotations per minute. The flow of hot gases downstream of the axial turbine is directed perpendicular to the rotation axis to expand further into the low pressure turbine. The first nozzle of the low pressure radial turbine 49 is supported by the diaphragm 50 which also include the drain and vent channels of the bearing 22, the nozzles of the high pressure turbine and the nozzles of the radial turbine 49. The diaphragm 50 is mechanically and fluidly connected to the structure that supports the deswirl vanes 5 via a flange. The exhaust gases, once expanded in the radial turbine 16, are fed into a transition piece 17 which distributes the flow from an annular surface to openings positioned in correspondence with the vanes 5. The hot gas flow at 500-600°C passes through the internal volume of the deswirl vanes 5 exchanging heat both with the flow of air coming from the fan in the channel 25, through the surfaces of the deswirl vanes 5, and with the flow of compressed air coming from the compressor inside the recuperator 5 as shown in Fig. 6. The combustion gases that flow inside the vanes 5 heat up the air flow that passes through the channel 25 up to the vane trailing edge 32 which has an opening, not shown in the drawing, to discharge the gas generator combustion gases into the environment.

The air flow from the fan passes through the channels 25 and is discharged into the environment with a speed, generally equal to that of the exhaust gases, which is defined by its volumetric flow rate and the area of the channels 25 at the trailing edge of the vane 32. An equal speed between the two flows at the turbofan exhaust allows to minimize the mixing losses with obvious advantages in terms of efficiency.

In the exhaust area of the engine, where the temperatures of the combustion gases are minimum, is installed an electric generator 24, driven by an epicyclic reduction gear 36 which takes motion through a toothing made at the end of the shaft 23. The epicyclic reduction gear allows the matching of a "fast" gas generator, for example at 100000 RPM, to a 20000 RPM electric generator. This feature allows the use of an electric generator with relatively high power, approximately 15% of the power of the gas generator, useful for applications such as remotely piloted aircraft where on-board electronic devices have a relatively high electrical consumption.

The advantages of the present invention are based on a turbofan architecture which allows the combustion gases of the gas generator to be simultanuelsy used to supercharge the fan air flow and to heat up the compressor air flow before entering the combustion chamber . This engine architecture using a radial outflow turbine to drive the fan makes possible a compact design of a high by-pass ratio turbofan improving both the propulsive efficiency and thermodynamic efficiency of the gas turbine.

The simple architecture, characterized by a limited number of components, is particularly suited for small engines that are not using complex configurations such as those present on modern high-power turbofan engines with high by pass ratio.

## Claims

1. Supercharged turbofan with recuperative cycle comprising:
- A fan including one or more axial or diagonal impellers 1 followed by de-swirl airfoils 5 wherein each impeller is rigidly coupled to a shaft driven by a turbine
- A gas turbine fluidly coupled to the turbine driving the fan 16 including one or more shafts without rotating mechanical connections with the fan shaft.
- Means to circulate the gas turbine exhaust gases, with temperatures higher than 400°C, inside the fan de-swirl airfoils 5 containing fins and other means to enhance the heat exchange made by additive manufacturing or brazing and heat up their surfaces in contact with the air-stream of the fan to transfer heat and energize the core flow without mixing turbofan air-streams and exhaust gases.

2. Turbofan of claim 1, wherein the turbine driving the fan, which is mechanically connected to the fan shaft, is multistage radial outflow.

3. Turbofan of claim 1, wherein de-swirl airfoils 5 have an axial extension length between 40% and 90% of the entire axial length of the turbofan, a ratio between airfoil height and chord smaller than 10 and cavities inside the airfoil profile for the circulation of fluids.

4. Turbofan of claim 1 wherein de-swirl airfoils 5 embed, or are part of, recuperative heat exchangers fluidly connected to the compressor delivery 10 and gas turbine exhaust 17

5. Turbofan of claim 4 wherein the compressor is fluidly connected to the de-swirl airfoils 5 by means of transition piece distributing the flow from the diffuser annulus to slots circumferentially located in correspondence to the airfoils.

6. Turbofan of claim 4 wherein the compressor airflow cools down in heat exchangers embedded, or part of, in the de-swirl airfoils 5
